# EUROPEAN PATENT APPLICATION

(11) **EP 4 653 110 A1**
(43) Date of publication of application: **26.11.2025**
(21) Application number: 25177547.4
(22) Date of filing: 20.05.2025
(51) Int. Cl.: B22D 17/22, B29C 45/40

(54) **EJECTION UNIT FOR DIE-CASTING MOULDS**

(30) Priority: 21.05.2024 IT 202400011479
(71) Applicant: IDRA S.R.L., 25039 Travagliato (IT)
(72) Inventor: FERRI, Ruggero, 25038 Rovato (Brescia) (IT); COMAI, Andrea, 25126 Brescia (Brescia) (IT); FAVA, Giacomo Martino, 25049 Iseo (Brescia) (IT)
(74) Representative: Forattini, Amelia

(57) **Abstract**

An ejection unit, particularly for die-casting moulds, comprising movable external plates, a fixed central plate, a movable internal plate, a fixed counterplate integral with the fixed central plate, rotating push rods, and non-rotating push rods; the rotating push rod comprises an interchangeable sector customised according to the dimensions of the mould; the rotating push rods can be mechanically repeatable placed, respecting a correct geometric position of the interchangeable sector.

## Description

The present invention relates to an ejection unit for die-casting moulds of aluminium alloys, light alloys, brass and similar alloys.

As is well known, die-casting presses equipped with adapted moulds produce castings for a multitude of uses.

Die-casting presses generally comprise three basic parts: a base, a clamping unit and an injection unit.

The base includes a hydraulic system that supports and guides the clamping unit.

The clamping unit comprises a fixed plane with a locking and opening system for the movable plane.

The injection unit has the function of pressure filling the figure in the mould with molten metal.

The moulds, in two halves, are mounted between the moving plane and the fixed plane, the closing of the press planes opposes the opening caused by the pressurised filling of the figure with molten metal, the formed die casting is removed after cooling and the mould is opened.

The half mould mounted on the moving plane has an internal movable part, the casting ejection plate, which is used for the detachment and ejection of the die-cast, performed with the mould open.

When the die casting has been removed from the mould, the internal movable part of the mould returns to its initial position.

The ejection plate in the mould is moved by push rods, usually manually screwed to an external plate, which is part of the die-casting press, called the die-casting ejection unit.

The press ejection unit is located at the rear of the movable plane and is moved by hydraulic cylinders.

US2018/194051A1 discloses a moulding device having a shaft body provided on a mould among a first mould and a second mould that form a moulding space, the shaft body is used for pushing out a moulded article formed from a resin injected into the moulding space; a ring-shaped elastic member for supporting the shaft body in which an opening formed along the circumferential direction is oriented toward the moulding space; and an injection portion provided on one mould among the first mould and the second mould, the injection portion being used for injecting a pressurized fluid into the moulding space. This moulding device is not provided with rotating push rods.

CN109954860A discloses an ejection device having a fixed mould bottom plate, wherein an ejection needle plate and a lower needle plate are arranged on the fixed mould bottom plate, an ejector sleeve is arranged on the ejection needle plate and penetrates through the lower needle plate; a centre is fixedly arranged on the fixed mould bottom plate; the centre penetrates through the ejector sleeve; the upper end surface of the centre exceeds the upper end surface of the ejector sleeve, and the lifting mechanism is fixedly arranged on the lower needle plate; the lifting mechanism is movably connected with the ejection needle plate and enables the ejection needle plate to rise along with the lower needle plate, when the ejection needle plate pushes the ejector sleeve to rise and the upper end of the ejector sleeve is flush with the upper end of the centre; the lifting mechanism is separated from the ejection needle plate. This ejection device is not provided with rotating push rods.

CN109664475A discloses a forming and die releasing device having an injection moulding assembly, a forming chamber assembly and a rotating push-out mechanism, wherein the forming chamber assembly comprises a mould cavity which is arranged on a fixed die plate and is connected to the injection moulding assembly, and a mould core which fits the mould cavity and is arranged on a movable die plate; the rotating push-out mechanism comprises a rotating driving assembly for driving the mould core to rotate, and a push-out driving assembly which is used for pushing out a product from the mould core while the mould core rotates. The product is pushed out while the mould core rotates. The rotating push-out mechanism is arranged inside the mould and the motion and rotation is possible only by closing the mould, limiting the use and inspection of the mould.

The aim of the present invention is to provide an ejection unit, particularly for die-casting moulds of aluminium alloys, light alloys, brass and similar alloys, improved over the known prior art.

Within this aim, an object of the invention is to provide an ejection unit with a mechanical locking system and push rod rotation.

A further object of the present invention is to provide a unit that, due to its special construction characteristics, is able to ensure the broadest guarantees of reliability and safety in use.

The above aim and objects, and others which will better appear hereafter, are achieved by an ejection unit, particularly for die-casting moulds of aluminium alloys, light alloys, brass and similar alloys, as claimed in the appended claims.

Further characteristics and advantages will become better apparent from the description of a preferred, but not exclusive, embodiment of the invention, illustrated by way of non-limiting example in the accompanying drawings, in which:

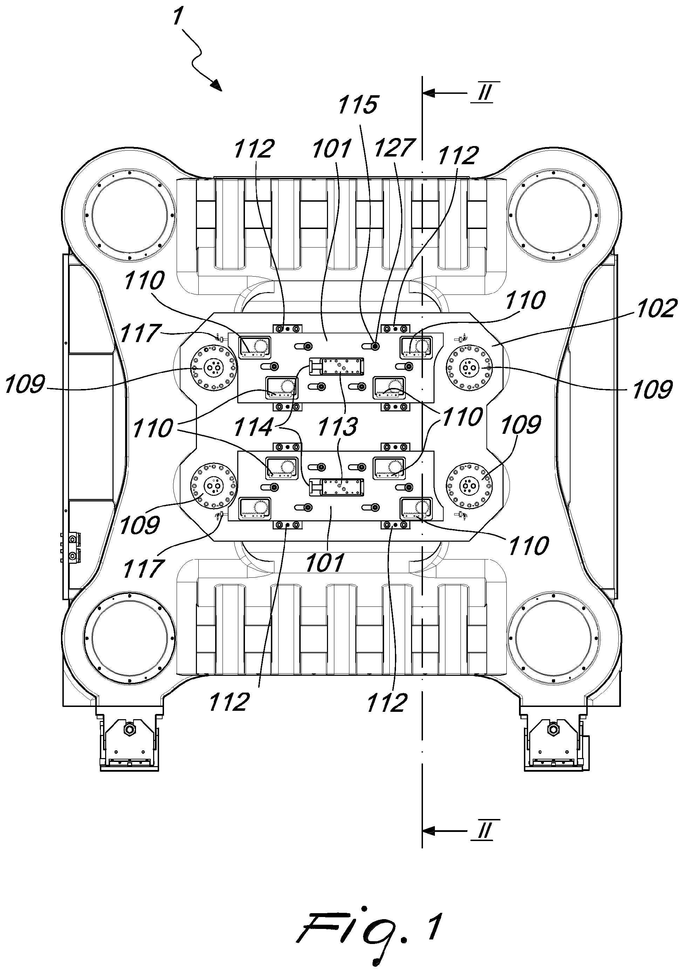

Figure 1 is a front view of the ejection unit according to the invention;

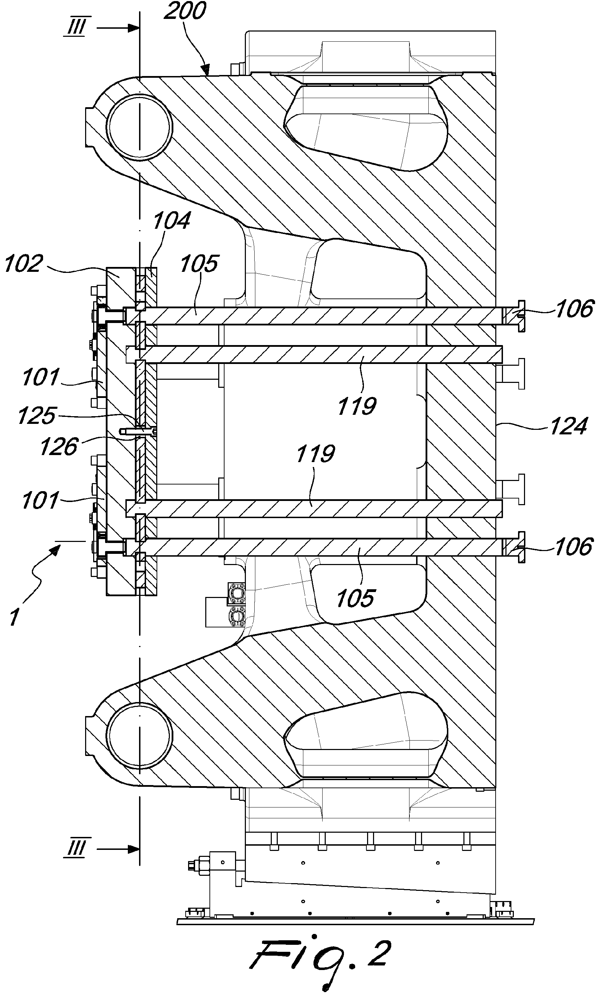

Figure 2 is a sectional view, according to plane II-II of figure 1;

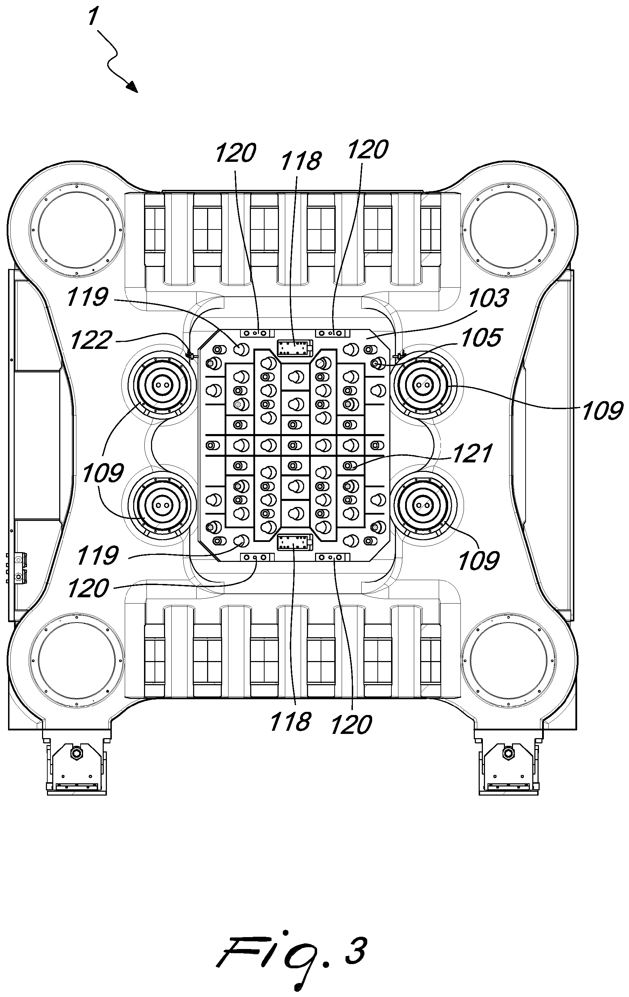

Figure 3 is a view according to section plane III-III of Figure 2;

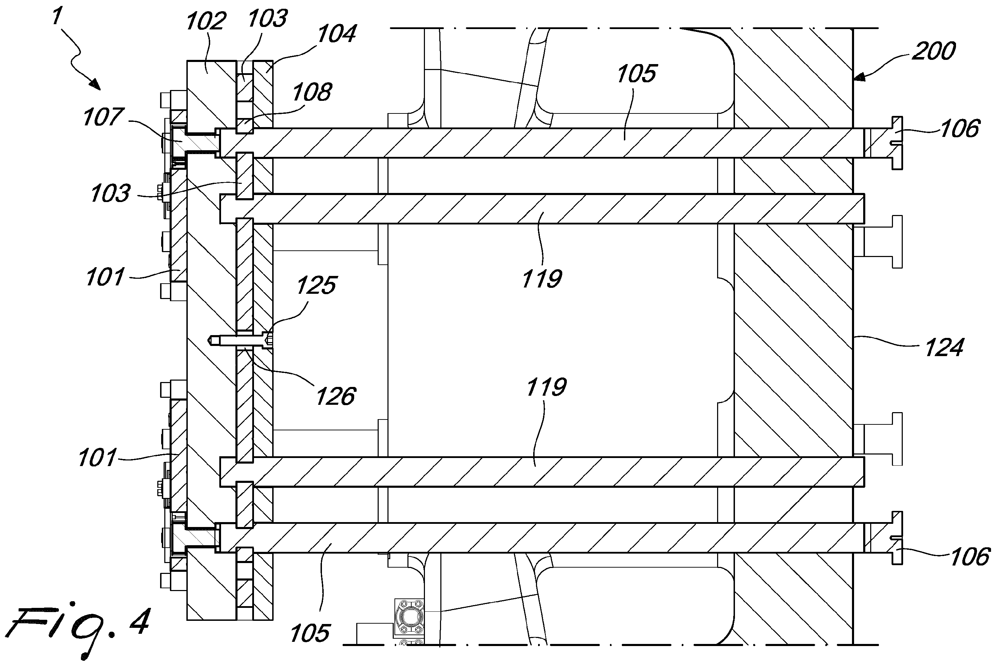

Figure 4 is a cross-sectional view, enlarged with respect to Figure 2;

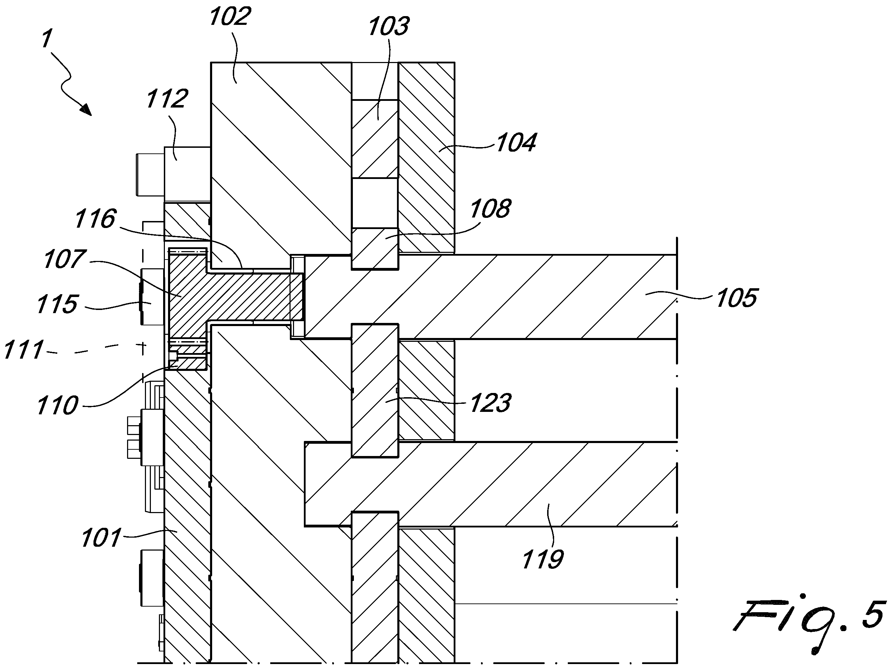

Figure 5 is a partial sectional view, enlarged with respect to Figure 4.

With reference to the figures, the ejection unit according to the invention, generally designated by reference numeral 1, comprises two movable external plates 101, a fixed central plate 102, a movable internal plate 103, a fixed counterplate 104 integral with the fixed central plate 102, and rotating push rods 105 operated by hydraulic cylinders 113 and consequent mechanical clamping by means of the movable internal plate 103 and other non-rotating push rods 119, locked by hydraulic cylinders 118 and consequent mechanical clamping by means of the movable internal plate 103.

The fixed counterplate 104 has the function of containing the movable plate 103 and comprises centring slots in order to facilitate entry from the side 124 of the rotating push rods 105 and non-rotating push rods 119.

Movable plates 101 and 103 are moved by dedicated hydraulic cylinders 113, 118.

The entire ejection unit is driven by four hydraulic cylinders 109.

The rotating push rod 105 comprises a central shaft with an interchangeable locked sector 106, customised according to the size of the mould.

On the opposite side, a centring and dragging seat with a rotation pinion 107 and a locking collar 108 is provided.

The non-rotating push rod 119 comprises a central shaft whose length depends on the dimensions of the mould; the centring seat and a locking collar 123 are provided on the opposite side.

Each movable plate 101 comprises seats for racks 110, one rack 110 for each rotating push rod 105, and each seat is closed by a cover 111.

The movable external plate 101, each with four pad guide spacers 112, is moved by means of the hydraulic cylinder 113; stop elements 114 limit the stroke and sealing spacers 115 hold the movable external plate 101 in position with the fixed central plate 102.

The fixed central plate 102 has seats on its front surface, in order to accommodate bushings 116 for the pinions 107 and cylinders 109.

The fixed central plate 102 comprises four pad guide spacers 112 with oil cylinders 113, sealing spacers 115 with front fixing screws 127, and limit switches 117.

The fixed central plate 102 comprises, on its rear surface, seats for the supporting and centring of rotating push rods 105 and non-rotating push rods 119.

The fixed central plate 102 comprises four pad guide spacers 120 with hydraulic cylinders 118, spacers 121 and limit switches 122.

The fixed central plate 102 has holes on the rear surface in order to place the fixed counterplate 104 with rear spacers 126 and rear fixing screws 125.

The rotating push rods 105 and non-rotating push rods 119, thus positioned in the new ejection unit, are inserted from the side 124 of the movable plane 200 and are locked by moving the movable internal plate 103.

The movable plane half-mould can only be mounted and clamped on the side 124 of the movable plane 200, only with the rotating push rods 105 rotated by 90° engaging the casting ejection plate inside the mould.

The ejector unit according to the present invention allows the rotating push rods 105 to be positioned with mechanical repeatability, respecting the correct axial geometric position due to the presence of the centrings on the fixed counterplate 104 and on the fixed central plate 102 and with front stop of the rotating push rods 105.

The present invention allows to place the rotating push rods 105 with mechanical repeatability while respecting the correct geometric position of the interchangeable sector 106, due to the presence of the pinion position plugs 107 and with the seats provided on the rotating push rods 105.

The invention also allows to place the rotating push rods 105 with mechanical repeatability while respecting the correct geometric position of the interchangeable sector 106 with the pinion 107, with the fixed position of the hydraulic cylinder 113 while pushing out and against the stop elements 114 and with the limit switches 117 in closed contact.

The invention allows to place the rotating push rods 105 with mechanical repeatability respecting the correct axial geometric position of the interchangeable sector 106 with the pinion 107 positioned against the cover 111.

The invention allows to place and hold rotating push rods 105 with mechanical repeatability while observing the correct axial geometric position in the centrings on the fixed counterplate 104 and on the fixed central plate 102 and with the movable internal plate 103 in the unlocked push rod position and with limit switch 122 in open contact position.

The invention also allows to place the non-rotating push rods 119 with mechanical repeatability while respecting the correct axial geometric position, due to the presence of centrings on the fixed counterplate 104 and on the fixed central plate 102 with the front stop of the non-rotating push rods 119.

Also in this case, the correct axial geometric position in the centrings on the fixed counterplate 104 and on the fixed central plate 102 and with the movable internal plate 103 in the rod release position and with limit switch 122 in open contact position is observed.

The invention allows to place and use only the rotating push rods 105, or only the non-rotating push rods 119, or both, according to the intended use of the mould.

The invention allows rotating push rods 105 and non-rotating push rods 119, which are inserted from the side 124 of the movable internal plane, to be blocked by the movement of the movable internal plate 103.

With the half-mould mounted and locked on the side 124 of the movable plane 200, the present invention allows for 90° rotation of the rotating push rods 105 with the hydraulic cylinders 113 and for locking the jet ejection plate within the half-mould, moving the ejection unit by means of the four hydraulic cylinders 109 for the detachment and ejection of the die-cast jet.

Contrary to the cited prior art documents, a half-mould associated with the movable plane 200 of the present invention can be mounted and locked on the side 124 of the movable plane 200 by means of the rotating push rods 105 rotated by 90°, thus engaging said ejection plate within said mould.

According to the present invention, the ejection unit, including rods 105 and 119, is positioned outside, on the rear side of the moving plate 124.

The rotation angle of the rotating rods according to the invention is adjustable by modifying the stops elements 114.

According to the present invention, the rotating push rods 105 and the non-rotating push rods 119 are automatically locked and do not have to be locked manually.

The ejection unit according to the present invention allows a simpler mould structure that facilitates the design and reliability of the mould, also reducing the manufacturing costs.

In practice, it was found that the invention achieves the intended scope and purpose by means of an improved ejection unit compared to the known technique with a mechanical clamping system and push rod rotation.

## Claims

1. An ejection unit, particularly for die-casting moulds, **characterized in that** it comprises movable external plates (101), a fixed central plate (102), a movable internal plate (103), a fixed counterplate (104) integral with said fixed central plate (102), rotating push rods (105), and non-rotating push rods (119); said rotating push rod (105) comprising an interchangeable sector (106); said rotating push rods (105) being positioned with mechanical repeatability, respecting a correct geometric position of said interchangeable sector (106); said rotating push rods (105) and said non-rotating push rods (119) being inserted on one side (124) of a movable plane (200) and being locked by moving said movable internal plate (103) contained by said fixed counterplate (104).

2. The unit, according to claim 1, **characterized in that** said rotating push rods (105) are operated by hydraulic cylinders (113) with mechanical clamping by means of said movable internal plate (103); said non-rotating push rods (119) being clamped by means of hydraulic cylinders (118) and mechanical clamping by means of said movable internal plate (103).

3. The unit, according to claim 1 or 2, **characterized in that** said ejection unit is moved by hydraulic cylinders (109).

4. The unit, according to one or more of the preceding claims, **characterized in that** said rotating push rod (105) comprises a central shaft with said interchangeable locked sector (106); on the opposite side being a centring and driving seat provided with a rotation pinion (107) and a locking collar (108).

5. The unit, according to one or more of the preceding claims, **characterized in that** said non-rotating push rod (119) comprises a central shaft having a length according to the dimensions of said mould; a centring seat and a locking collar (123) being provided on the opposite side.

6. The unit, according to one or more of the preceding claims, **characterized in that** each movable plate (101) comprises seats for racks (110), one rack (110) for each rotating push rod (105); each seat being closed by a cover (111).

7. The unit, according to any one or more of the preceding claims, **characterized in that** each movable external plate (101) comprises pad guide spacers (112) and is moved by means of said hydraulic cylinder (113); stop elements (114) limiting the stroke and sealing spacers (115) by keeping said movable external plate (101) in position with said fixed central plate (102).

8. The unit, according to any one or more of the preceding claims, **characterized in that** said fixed central plate (102) has, on its front surface, seats for receiving bushings (116) for said pinions (107) and houses said cylinders (109); said fixed central plate (102) including said pad guide spacers (112) with said hydraulic cylinder (113), said sealing spacers (115), and a limit switch (117); said fixed central plate (102) comprises, on its rear surface, seats for the supporting and centring of said rotating push rods (105) and said non-rotating push rods (119).

9. The unit, according to one or more of the preceding claims, **characterized in that** said fixed central plate (102) comprises pad guide spacers (120) with said hydraulic cylinders (118), spacers (121) and limit switches (122).

10. The unit, according to one or more of the preceding claims, **characterized in that** said fixed central plate (102) comprises rear spacers (126) and rear screws (125) positioning said fixed counterplate (104) housing said movable internal plate (103).

11. The unit, according to one or more of the preceding claims, **characterized in that** a half-mould associated with said movable plane (200) can be mounted and locked on said side (124) of said movable plane (200) only by means of the rotating push rods (105) rotated by 90°, engaging said ejection plate within said mould.
